# EUROPÄISCHE PATENTANMELDUNG

(11) **EP 1 911 383 A1**
(43) Veröffentlichungstag der Anmeldung: **16.04.2008**
(21) Anmeldenummer: 06405433.1
(22) Anmeldetag: 10.10.2006
(51) Int. Cl.: A47J 36/26, A47J 37/07

(54) **Kochvorrichtung zur Verwendung im Freien**

(71) Anmelder: Blechverpackungen Louis Sauter AG, 8272 Ermatingen (CH)
(72) Erfinder: Lang, Jakob, 8586 Andwil (CH); Cossy, Eric Gérald, 8360 Eschlikon (CH)
(74) Vertreter: Liebetanz, Michael

(57) **Zusammenfassung**

Eine Kochvorrichtung umfasst eine Brennerdose (1) mit einer Seitenwand (10), einem Boden (11) und einem entfernbaren Deckel. Weiter umfasst die Kochvorrichtung eine mittlere Dose (2) mit einer Seitenwand (20), einem Boden (21) und einem entfernbaren Deckel und eine obere Dose (3) mit einer Seitenwand (30), einem Boden (31) und einem entfernbaren Deckel. Die mittlere Dose (2) ist auf der Brennerdose (1) und die obere Dose (3) ist auf der mittleren Dose (3) oder auf der Brennerdose (1) angeordnet.

## Beschreibung

### Technisches Gebiet der Erfindung

Die vorliegende Erfindung betrifft eine Kochvorrichtung zur Verwendung im Freien und weist die Merkmale des Oberbegriffs des Anspruchs 1 auf.

### Stand der Technik

Aus dem Stand der Technik sind Kochvorrichtungen zur Verwendung im Freien bekannt. Solche Vorrichtungen werden insbesondere von Campern, Wanderern oder Bergsteigern zur Zubereitung einer warmen Mahlzeit eingesetzt.

Die schweizerische Armee verwendet unter der Bezeichnung "Notkocher 71" einen solchen Kocher. Es handelt sich hierbei um ein Gefäss mit einer zylindrischen Grundform mit einem Aufsatz. Das Gefäss ist mit einer brennbaren Paste aufgefüllt. Der Aufsatz kann auf das Gefäss aufgelegt werden. Das zu garende oder zu kochende Gut liegt meist in einer Konservendose vor, welche auf den Aufsatz aufgelegt werden kann.

Ebenfalls als Kocher werden beispielsweise Bunsenbrenner oder Benzinkocher verwendet. Hierbei werden aber Pfannen oder ähnliche Kochgeräte auf den Brenner aufgelegt.

Nachteilig bei den genannten Kochern ist, dass die Speisen relativ schnell anbrennen.

Ein weiterer Nachteil bei den genannten Kochern ist die geringe Stabilität und die Empfindlichkeit auf mechanische Einflüsse wie Stösse, etc. Es kann dabei vorkommen, dass die Kocher mit dem Kochgeschirr oder der Konservendose umfallen, wenn das zu garende Lebensmittel mittels eines Rührgerätes umgerührt wird. Weiterhin kann es vorkommen, dass das Kochgeschirr oder die Konservendose vom Kocher gestossen werden.

### Darstellung der Erfindung

Es ist deshalb eine Aufgabe der Erfindung, eine Kochvorrichtung zu schaffen, welche die Nachteile des Standes der Technik überwindet.

Diese Aufgabe löst eine Kochvorrichtung mit den Merkmalen des Patentanspruchs 1.

Demgemäss umfasst eine Kochvorrichtung eine Brennerdose mit einer Seitenwand, einem Boden und einem entfernbaren Deckel. Weiter umfasst die Kochvorrichtung eine mittlere Dose mit einer Seitenwand, einem Boden und einem entfernbaren Deckel und eine obere Dose mit einer Seitenwand, einem Boden und einem entfernbaren Deckel. Die mittlere Dose ist auf der Brennerdose und die obere Dose ist auf der mittleren Dose oder auf der Brennerdose angeordnet. Eine solche Anordnung der besagten Dosen ist besonders vorteilhaft, denn dadurch wird eine besonders schonende Erhitzung der mittleren bzw. der oberen Dose ermöglicht.

Die Brennerdose, die mittlere Dose und die obere Dose sind bevorzugterweise im wesentlichen identisch zueinander ausgestaltet. Diese identische Ausgestaltung ist vorteilhaft, denn dadurch kann die erfindungsgemässe Vorrichtung in kostengünstiger Art und Weise hergestellt werden.

Bevorzugt werden die Brennerdose, die mittlere Dose und die obere Dose im wesentlichen zylinderförmig ausgestaltet.

Bevorzugterweise umfasst die Vorrichtung weiter wenigstens ein Verbindungselement. Ein erstes Verbindungselement ist dabei zwischen der Brennerdose und der mittleren Dose angeordnet. Anstelle des ersten Verbindungselementes oder zusätzlich zum ersten Verbindungselement kann ein zweites Verbindungselement zwischen der mittleren Dose und der oberen Dose angeordnet werden. Das Anordnen der Verbindungselemente oder des Verbindungselementes sorgt für einen stabilen Aufbau der erfindungsgemässen Kochvorrichtung.

Weitere vorteilhafte Ausführungsformen sind in den Unteransprüchen gekennzeichnet.

### Kurze Beschreibung der Zeichnung

Die Erfindung wird im folgenden anhand der Zeichnung näher beschrieben. Es zeigt:

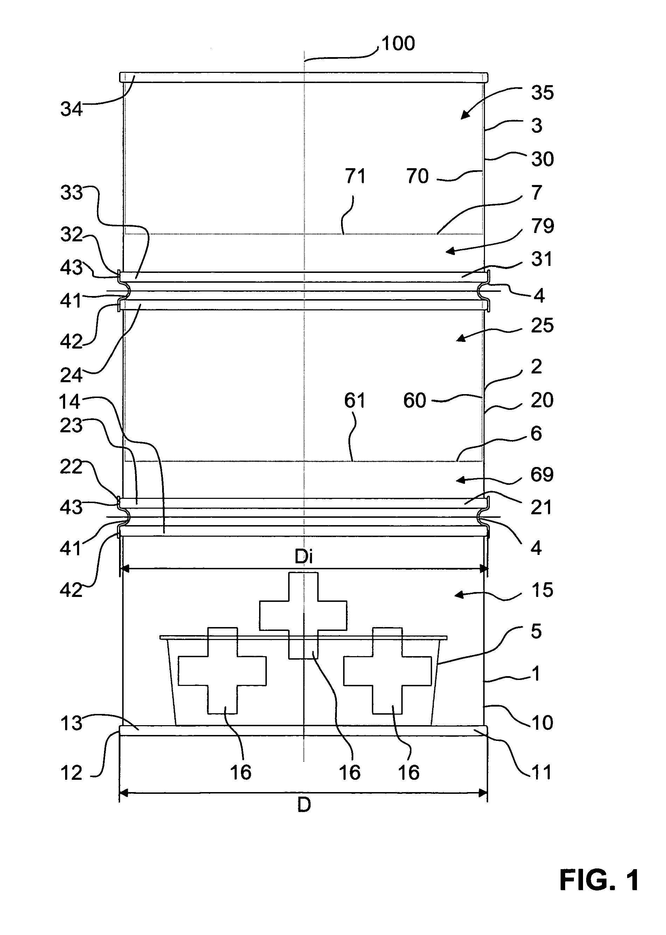

- Fig. 1: eine schematische Ansicht einer Kochvorrichtung gemäss der vorliegenden Erfindung.

### Beschreibung eines Ausführungsbeispiels

Figur 1 zeigt eine erfindungsgemässe Ausgestaltung einer Kochvorrichtung gemäss der vorliegenden Erfindung in einer schematischen Darstellung. Die Kochvorrichtung umfasst eine unter Dose als Brennerdose 1, eine mittlere Dose 2 und eine obere Dose 3. Im weiteren kann die Kochvorrichtung einen Brenner 5 und Verbindungselemente 4 umfassen. Zudem kann die Vorrichtung eine mittlere Einsatzdose 6 und eine obere Einsatzdose 7 umfassen.

Die Brennerdose 1 weist eine Seitenwand 10 und einen Boden 11 auf. Der Boden 11 hat vorzugsweise eine kreisförmige Grundfläche. Die Seitenwand 10 erstreckt sich senkrecht zum Boden 11 und verläuft konzentrisch zum Rand 12 des Bodens 11. Die dabei entstehende Brennerdose 1 weist demzufolge eine zylindrischen Aussenform und eine Innenraum 15 auf. Bedingt durch die Herstellung der Dose entsteht in dem Bereich, in welchem die Seitenwand 10 vom Boden 11 aufragt eine Art umlaufender Wulst 13, wobei der Wulst auch als Aufbördelung bezeichnet werden kann. Zudem kann die Brennerdose auch einen oberen Wulst 14 aufweisen. Die Brennerdose 1 weist einen Aussendurchmesser D auf, wobei der Durchmesser D den maximalen Durchmesser der Brennerdose 1 definiert. Demnach erstreckt sich der maximale Durchmesser hier über den Wulst 13. Vorzugsweise ist der Durchmesser D zwischen 80mm und 120mm. Alternativ kann die Brennerdose 1 auch einen grösseren oder kleineren Durchmesser aufweisen.

Die Öffnung, welche dem Boden 11 gegenüber angeordnet ist und Zugang zum Innenraum 16 gibt, wird mit einem nicht dargestellten entfernbaren Deckel verschlossen. Als entfernbarer Deckel wird vorzugsweise eine abziehbare Folie oder ein Konservendosendeckel eingesetzt.

Andere Grundformen bzw. Aussenformen der Brennerdose 1 sind natürlich auch denkbar. Insbesondere können auch rechteckige, quadratische, elliptische oder ovale Grundformen gewählt werden. Dabei verändert sich auch die Aussenform der Brennerdose 1.

Im bevorzugten Ausführungsbeispiel wird der Innenraum 15 der Brennerdose 1 mit einem handelsüblichen Brenner 5 ausgerüstet.

Der Brenner 5 kann beispielsweise eine Aluschale mit einem Deckel sein, wobei die Aluschale mit flüssiger oder gelartiger Brennpaste gefüllt ist. In einer anderen Ausführungsform kann die Brennpaste auch direkt in den Innenraum 15 der Brennerdose 1 gefüllt werden. Alternativ können auch andere Brenner verwendet werden. Zudem kann der Innenraum 15 auch mit einer Betriebsanleitung, zusammensteckbaren Besteck, insbesondere Gabeln, und/oder mit Streichhölzern ausgerüstet sein.

Die mittlere Dose 2 und die obere Dose 3 sind analog zur Brennerdose 1 aufgebaut. Die mittlere Dose 2 und die obere Dose 3 weisen demnach ebenfalls eine Seitenwand 20 bzw. 30, einen Boden 21 bzw. 31, einen unteren Wulst 23 bzw. 33, einen oberen Wulst 24 bzw. 34 und einen Innenraum 25 bzw. 35 auf. Gleiches gilt für die Öffnungen zu den Innenräumen 25 bzw. 35, welche ebenfalls mit einem nicht dargestellten Deckel, wie beispielsweise einer abziehbaren Folie oder einem Konservendosendeckel, verschlossen werden können.

Die Böden 11, 21, 31 weisen vorzugsweise kongruente Grundformen auf. Das heisst, die Grundformen der Brennerdose 1, der mittleren Dose 2 und der oberen Dose 3 sind im wesentlich zueinander kongruent oder deckungsgleich. Besonders bevorzugt sind die Brennerdose 1, die mittlere Dose 2 und die obere Dose 3 identische Dosen. Demnach weisen die drei Dosen 1, 2, 3 gleiche Abmessungen in Bezug auf Höhe und Durchmesser auf. Besonders bevorzugt sind die drei Dosen 1, 2, 3 handelsübliche Konservendosen. Dies verringert die Herstellkosten massiv, da für alle drei Dosen 1, 2, 3 nur eine einzige Ausführungsform hergestellt werden muss.

Der Innenraum 25 der mittleren Dose 2 wird vorzugsweise mit konservierten Brotstücken befüllt. Der Innenraum 35 der oberen Dose 3 wird vorzugsweise mit einer Käsemischung aufgefüllt, wobei unter Käsemischung ein Fertigfondue, ein frisches Fondue oder ein Raclette zu verstehen ist. Andere Lebensmittel können natürlich auch eingesetzt werden.
**[Q: Konservierte Brotstücke: Sind diese dem Fachmann bekannt? Evtl. sollten Sie hier erwähnen was die konservierten Brotstöcke beinhalten.]**

In der Figur 1 weist die Brennerdose 1 zudem Öffnungen 16 auf, welche hier in der Form eines Kreuzes dargestellt sind. Alternativ können die Öffnungen eine beliebige Form aufweisen und können z.B. kreisförmig, elliptisch, rechteckig, quadratisch oder oval sein. Ebenfalls ist es denkbar, dass die Öffnungen ein Firmenlogo oder eine bekannte Marke darstellen. Diese Öffnungen ermöglichen das Einströmen von Luft in die Brennerdose 1. Die einströmende Luft dient dabei der Sauerstoffzufuhr für den Brenner 5. Alternativ können solche Öffnungen 16 auch in der mittleren Dose 2 angebracht werden. In einer weiteren Ausführungsform ist es zudem denkbar, die Öffnungen 16 in der Brennerdose 1 und in der mittleren Dose 2 anzubringen. Vorzugsweise werden die Öffnungen 16 gestanzt.

Das Verbindungselement 4 weist im bevorzugten Ausführungsbeispiel die Form eines hohlzylinderförmigen Körpers auf. Der Durchmesser dieses Körpers ist um ein vielfaches grösser als die Höhe dieses Körpers. In diesem Falle kann das Verbindungselement 4 auch als Ring bezeichnet werden. Das Verbindungselement 4 weist zudem eine Sicke 41 auf. Die Sicke 41 erstreckt sich dabei in radialer Richtung in den hohlzylinderförmigen Körper hinein, so dass die lichte Weite desselben verkleinert wird. Die Sicke 41 ist derart ausgestaltet, dass diese sich um den gesamten Umfang des Verbindungselementes 4 erstreckt. In alternativen Ausführungsformen kann die Sicke 41 auch nur teilweise oder abschnittsweise über den Umfang des Verbindungselementes 4 verteilt angeordnet sein. Das heisst, es schliesst sich ein Abschnitt mit einer Sicke 41 an einen Abschnitt ohne Sicke. In einer weiteren alternativen Ausführungsform kann die Sicke auch durch Einprägungen ersetzt werden. Wobei sich diese Einprägungen ebenfalls radial in den hohlzylinderförmigen Körper erstrecken, so dass wiederum die lichte Weite verkleinert wird. Der hohlzylindrische Bereich 42 unterhalb der Sicke 41 wird als unterer Klemmbereich 42 und der hohlzylindrische Bereich 43 oberhalb der Sicke 41 wird als oberer Klemmbereich 43 bezeichnet. Der untere Klemmbereich 42 und der obere Klemmbereich 43 weisen einen Innendurchmesser Di auf, welcher etwas kleiner ist als der Aussendurchmesser D der Brennerdose 1 bzw. der mittleren Dose 2 und der oberen Dose 3. Vorzugsweise ist Durchmesser Di um etwa 0.2 bis 1 mm im Durchmesser kleiner als der Durchmesser D.

Die erfindungsgemässe Vorrichtung umfasst vorzugsweise zwei Verbindungselemente 4. Ein erstes Verbindungselement 4 dient der Verbindung der Brennerdose 1 mit der mittleren Dose 2. Ein zweites Verbindungselement 4 dient der Verbindung der mittleren Dose 2 mit der oberen Dose 3. Hierbei wird das Verbindungselement 4 von Hand mit dem unteren Klemmbereich 42 über den oberen Wulst 14 der Brennerdose 1 gestülpt bzw. aufgesteckt, bis der obere Wulst 14 an der Sicke 41 ansteht. Da der Innendurchmesser Di des Verbindungselementes 4 kleiner ist als der Aussendurchmesser D der Brennerdose 1, resultieren nach dem Überstülpen radiale Kräfte in Richtung einer Mittelachse 100. Solche radialen Kräfte können auch als Klemmkräfte bezeichnet werden. Das Verbindungselement 4 weist also federelastische Eigenschaften auf. Sobald das Verbindungselement 4 auf der Brennerdose 1 angeordnet ist kann die mittlere Dose 2 aufgesteckt werden. Auch hier resultiert ebenfalls eine beschriebene Klemmkraft auf die mittlere Dose 2. Demnach bewirkt das Verbindungselement 4 eine besonders gute Verbindung zwischen Brennerdose 1 und mittlerer Dose 2.

In analoger Weise wird die obere Dose 3 mit der mittleren Dose 2 verbunden. Die Brennerdose 1, die mittlere Dose 2 und die obere Dose 3 sind nun miteinander verbunden und sind entlang der Mittelachse 100 ausgerichtet.

Aufgrund der Verbindungselemente 4 wird eine Struktur erreicht, welche gegenüber mechanischen Einflüssen, welche beispielsweise durch Umrühren der zu garenden Speisen entstehen, besonders robust ist. Aus diesem Grunde eignet sich die erfindungsgemässe Vorrichtung sehr gut zur Zubereitung eines Fondues, bei welchem die Benutzer das Brot im geschmolzenen Käse tunken bzw. schwenken.

Die Verwendung der vorliegenden Vorrichtung erfolgt bevorzugt in zwei Schritten. In einem ersten Schritt werden die mittlere Dose 2 mit dem Brot und die Brennerdose 1 geöffnet. Die beiden Dosen können dann zusammengesteckt werden, und der Brenner 5 kann angezündet werden. Dabei erwärmt sich das Brot, und die Konservierungsstoffe können austreten. Anschliessend können die Brotstücke aus der mittleren Dose 2 entfernt und beiseite gestellt werden.

In einem zweiten Schritt wird der mittlerweile leeren mittleren Dose 2 die obere Dose 3 mit der Käsemischung aufgesteckt. Aufgrund der Wärme, welche vom brennenden Brenner 5 nach oben hin abgestrahlt wird, kann sich der Käse langsam erwärmen. Sobald der Käse den gewünschten Flüssigkeitsgrad erreicht hat, kann der Benutzer die Brotstücke in den Käse hineintunken und das Fondue essen. Alternativ kann die mittlere Dose auch zuerst entfernt werden. Dann kann die obere Dose 3 direkt auch die Brennerdose 1 gestellt werden.

Alternativ kann die mittlere Dose 2 eine sehr schematisch dargestellte mittlere Einsatzdose 6 umfassen und/oder die obere Dose 3 kann eine ebenfalls sehr schematisch dargestellte obere Einsatzdose 7 umfassen. Hierbei kann auch von einer mehrteiligen Dose gesprochen werden. Die Einsatzdosen 6, 7 weisen eine zur mittleren Dose 2 und zur oberen Dose 3 ähnliche Grundform auf. Die Einsatzdosen 6, 7 weisen eine Seitenwand 60 bzw. 70 und einen Boden 61 bzw. 71 auf. Die Einsatzdosen 6, 7 sind dabei derart ausgestaltet, dass diese in die Innenräume 25 bzw. 35 der mittleren Dose 2 bzw. der oberen Dose 3 eingesetzt werden können. Die Seitenwände 61 bzw. 71 weisen eine geringere Höhe als die Seitenwand 20 der mittleren Dose 2 bzw. die Seitenwand 30 der oberen Dose auf. Wenn die Einsatzdosen 6, 7 in die mittlere Dose 2 bzw. in die obere Dose 3 eingesetzt werden, resultiert ein Zwischenraum 69 bzw. 79 zwischen dem Boden 21 der mittleren Dose 2 bzw. dem Boden 31 der oberen Dose 3 und des entsprechenden Bodens 61 bzw. 71 der entsprechenden Einsatzdose 6, 7. Diese Zwischenräume 69 bzw. 79 sind vorteilhaft, denn die Flamme des Brenners wirkt dann nicht direkt auf das zu garende Gut ein. Die Wärmeeinwirkung erfolgt demnach indirekt und ein Anbrennen der Speisen kann verhindert werden.

Sofern solche Einsatzdosen verwendet werden, beinhalten diese Einsatzdosen die Lebensmittel, also das Brot bzw. die Käsemischung.

Die Brennerdose 1, die mittlere Dose 2 und die obere Dose 3 werden vorzugsweise aus Weissblech gefertigt. Andere Werkstoffe, wie beispielsweise Aluminium können auch eingesetzt werden. Die genannten Dosen 1, 2, 3 sind vorzugsweise geschweisste Konservendosen aus Weissblech oder können auch mittels eines Tiefziehverfahren hergestellt werden.

Die günstige Fertigung erlaubt es, die Brennerdose 1, die mittlere Dose 2 und die obere Dose 3 als Einwegobjekte zu verwenden. Das heisst die genannten Dosen 1, 2, 3 werden nach der Verwendung entsorgt. Es ist aber auch denkbar, dass insbesondere die Brennerdose 1 mehrfach verwendet wird. Bei dieser mehrfachen Verwendung kann der Benutzer dann weitere mittlere Dosen 2 und obere Dosen 3 erwerben, welche mit den entsprechenden Lebensmitteln befüllt sind. Sofern die Vorrichtung mit der mittleren Einsatzdose 6 und/oder der oberen Einsatzdose 7 verwendet wird, können auch die mittlere Dose 2 und die obere Dose 3 mehrfach verwendet werden.

Bevorzugterweise werden die Brennerdose 1, die mittlere Dose 2 und die obere Dose 3 als Set miteinander in den Handel gebracht. Ebenfalls ist es natürlich denkbar, jede der Dosen 1, 2, 3 einzeln zu vertreiben.

Im weiteren ist es denkbar, die mittlere Dose 2 und die obere Dose 3 bzw. die mittlere Einsatzdose 6 und die obere Einsatzdose 7 mit anderen Lebensmittel als mit den oben beschriebenen zu bestücken. Fleisch in der einen und Gemüse in der anderen Dose wäre beispielsweise denkbar. Alternativ könnte man auch in die eine Dose dünn geschnittenes Fleisch und in die andere Dose eine Bouillon einfüllen, so dass die Benutzer ein Fondue Chinoise zubereiten können.

### Bezugszeichenliste

- 1: Brennerdose
- 2: mittlere Dose
- 3: obere Dose
- 4: Verbindungsmittel
- 5: Behälter für Brennpaste
- 6: mittlere Einsatzdose
- 7: obere Einsatzdose

- 10: Seitenwand
- 11: Boden
- 12: Rand
- 13: unterer Wulst
- 14: oberer Wulst
- 15: Innenraum
- 16: Öffnungen

- 20: Seitenwand
- 21: Boden
- 22: Rand
- 23: unterer Wulst
- 24: oberer Wulst
- 25: Innenraum

- 30: Seitenwand
- 31: Boden
- 32: Rand
- 33: unterer Wulst
- 34: oberer Wulst
- 35: Innenraum

- 41: Sicke
- 42: unterer Klemmbereich
- 43: oberer Klemmbereich

- 60: Seitenwand
- 61: Boden
- 69: Zwischenraum

- 70: Seitenwand
- 71: Boden
- 79: Zwischenraum

## Patentansprüche

1. Kochvorrichtung umfassend eine Brennerdose (1) mit einer Seitenwand (10), einem Boden (11) und einem entfernbaren Deckel, **dadurch gekennzeichnet, dass** die Kochvorrichtung weiter eine mittlere Dose (2) mit einer Seitenwand (20), einem Boden (21) und einem entfernbaren Deckel und eine obere Dose (3) mit einer Seitenwand (30), einem Boden (31) und einem entfernbaren Deckel umfasst, wobei die mittlere Dose (2) auf der Brennerdose (1) und die obere Dose (3) auf der mittleren Dose (3) oder auf der Brennerdose (1) angeordnet ist.

2. Kochvorrichtung nach Anspruch 1, **dadurch gekennzeichnet, dass** die Brennerdose (1), die mittlere Dose (2) und die obere Dose (3) im wesentlichen identisch zueinander ausgestaltet sind.

3. Kochvorrichtung nach einem der vorhergehenden Ansprüche, **dadurch gekennzeichnet, dass** die Brennerdose (1), die mittlere Dose (2) und die obere Dose (3) in wesentlichen zylinderförmig ausgestaltet sind.

4. Kochvorrichtung nach einem der vorhergehenden Ansprüche, **dadurch gekennzeichnet, dass** die Vorrichtung weiter wenigstens ein Verbindungselement (4) umfasst, wobei ein erstes Verbindungselement (4) zwischen der Brennerdose (1) und der mittleren Dose (2) und/oder ein zweites Verbindungselement (4) zwischen der mittleren Dose (2) und der oberen Dose (3) angeordnet ist.

5. Kochvorrichtung nach einem der vorhergehenden Ansprüche, **dadurch gekennzeichnet, dass** die Seitenwand (10) der Brennerdose (1) und/oder die Seitenwand (20) der mittleren Dose (2) Öffnungen (16) aufweisen.

6. Kochvorrichtung nach einem der vorhergehenden Ansprüche, **dadurch gekennzeichnet, dass** die mittlere Dose (2) mit einer mittleren Einsatzdose (6) mit einer Seitenwand (60) und einem Boden (61) und/oder die obere Dose (3) mit einer oberen Einsatzdose (7) mit einer Seitenwand (70) und einem Boden (71) ausgestattet ist.

7. Kochvorrichtung nach Anspruch 6, **dadurch gekennzeichnet, dass** die Seitenwand (60) der mittleren Einsatzdose (6) bzw. die Seitenwand (70) der oberen Einsatzdose (7) eine Höhe aufweist, welche kleiner ist als die Höhe der Seitenwand (20) der mittleren Dose (2) bzw. der Seitenwand (30) der oberen Dose (3), so dass sich zwischen dem Boden (61) der mittleren Einsatzdose (6) bzw. dem Boden (71) der oberen Einsatzdose (7) ein Zwischenraum (69, 79) ergibt

8. Brennerdose zur Verwendung in einer Kochvorrichtung nach einem der vorhergehenden Ansprüche 1 bis 7, **dadurch gekennzeichnet, dass** die Brennerdose (1) mit einem Brenner (5) und/oder Streichhölzern und/oder einer Bedienungsanleitung und/oder Besteck befüllt ist.

9. Mittlere Dose zur Verwendung in einer Kochvorrichtung nach einem der vorhergehenden Ansprüche 1 bis 7, **dadurch gekennzeichnet, dass** die mittlere Dose (2) mit Lebensmittel, insbesondere mit konserviertem Brot, befüllt ist.

10. Obere Dose zur Verwendung in einer Kochvorrichtung nach einem der vorhergehenden Ansprüche 1 bis 7, **dadurch gekennzeichnet, dass** die obere Dose (3) mit Lebensmittel, insbesondere mit Käse für ein Fondue oder ein Raclette, befüllt ist.

11. Verwendung einer Kochvorrichtung nach einem der vorhergehenden Ansprüche zur Zubereitung eines Fondues oder eines Raclettes.
